Europäisches Patentamt

European Patent Office

Office européen des brevets

(11) Publication number: **0 649 995 A1**

## EUROPEAN PATENT APPLICATION

(21) Application number: **94115382.7**

(22) Date of filing: **29.09.94**

(51) Int. Cl.6: **F16G 1/12**, F16G 5/10

(30) Priority: **20.10.93 JP 261458/93**

(43) Date of publication of application:
**26.04.95 Bulletin 95/17**

(84) Designated Contracting States:
**DE FR GB IT**

(71) Applicant: **BANDO CHEMICAL INDUSTRIES, LIMITED**
**2-15, Meiwa-dori 3-chome**
**Hyogo-ku**
**Kobe-shi (JP)**

(72) Inventor: **Takeuchi, Yuji c/o Bando Chemical Industries, Ltd.**
**2-15, Meiwa-dori 3-chome**
**Hyogo-ku**
**Kobe-shi (JP)**

(74) Representative: **Laufhütte, Dieter, Dr.-Ing. et al**
**Lorenz-Seidler-Gossel**
**Widenmayerstrasse 23**
**D-80538 München (DE)**

(54) **Tension member of belt.**

(57) A tension member (1) of a belt is composed of a cord formed in such a manner that many amorphous metallic fibers are arranged in parallel, twisted primarily to be formed into a yarn (3) and that the necessary number of yarns (3) are twisted, wherein the cord satisfies the following formula:

$$aD^2 + b\phi^2 + cD + d\phi + eD\phi + f \geq 0.900$$

in which D is a diameter of the cord in millimeters, $\phi$ is a diameter of the amorphous metallic wire in micrometers, a is -0.680, b is $-3.13 \times 10^{-5}$, c is 0.773, d is $2.78 \times 10^{-3}$, e is $2.42 \times 10^{-3}$, and f is 0.618.

Fig.1

Rank Xerox (UK) Business Services
(3.10/3.09/3.3.4)

BACKGROUND OF THE INVENTION

This invention relates to a tension member embedded in many kinds of belts such as a synchronous belt, a V-belt, a flat belt and a variable speed belt.

Since many kinds of belts such as a synchronous belt, a V-belt, a flat belt and a various speed belt require as its characteristics high strength, high elasticity and high dimensional stability, a tension member such as fabric and a reinforcing cord formed of fibers is generally embedded in each body of those belts in order to fill the above requirement for the belts.

Meanwhile, in recent years, there have been growing requirements of maintenance-free performance and increase in belt life from the viewpoints of particularly compaction and safety of a machine.

Accompanying with the compaction of the machine, a belt driving system gradually shifts from two-shaft drive in which one driven shaft is driven to multi-shaft drive in which many driven shafts are simultaneously driven by one belt. Further, due to the tendency to reduce a pulley in diameter, the tension member is subjected to heavy flection by the multi-shaft drive. Therefore, in addition to the above characteristics, there is also a demand of flection fatigue resistance for the tension member of the belt.

Furthermore, a high-performance belt such as a belt for continuous speed-shifting device requires high strength and heat resistance in order to be used under conditions of high temperature and heavy load.

For a tension member of a timing belt for automobile and the like, there is now commonly used a glass cord or an aramid cord which have large modulus of elasticity. When the glass cords are used as tension members of the belt, due to its high coefficient of linear expansion, the belt has insufficient flection fatigue resistance though it has good adaptability to thermal expansion of a pulley or the like.

The aramid cord has a characteristic of generating a thermal shrinkage though it has good flection fatigue resistance. When the aramid cords are used as tension members, thermal expansions of an engine and a pulley at the warming up of the engine invites a thermal shrinkage of the belt, thereby increasing the belt tension. This promotes the flection fatigue of the tension members and causes the failure of teeth. As a result, the failure of the transmission device may cause. On the contrary, in cold climates, the belt tension decreases. This generates an engagement failure between the belt and pulley at the starting of the engine so that the belt jumps. Thereby, the belt life is shortened.

To cope with the above problems, there has been proposed a tension member for belt which uses a cord so formed that amorphous metallic fibers having a high coefficient of linear expansion and excellent flection fatigue resistance are twisted together (for example, see Japanese Patent Application Laying Open Gazette Nos. 62-282087, 63-158233 and 2-289192). Here, the amorphous metallic fiber means metallic fiber material without a regular atomic structure as common metallic fibers such as a steel wire and a stainless wire have. Due to no regularity in atomic structure, the amorphous metallic fiber has higher strength and higher fatigue resistance than the common metallic fiber. Further, if the amorphous metallic fiber is formed of a suitable composition, it becomes metallic fiber material having good corrosion resistance.

However, in the case that a cord in which such amorphous metallic fibers are twisted are used for a tension member, when a cord in which fibers make up a high proportion per cross sectional area of the cord is produced by using amorphous metallic fiber wire having small wire diameter, a parallel arrangement of wires cannot be sufficiently carried out and well-organized wires cannot be obtained. Accordingly, the resultant cord has low utilization ratio of wire strength per cross sectional area of the cord.

As a result, the cord is used in the range in which the strength potential thereof is high, i.e., close to its limit, so that the life against fatigue is shortened. Further, when the cord is produced by using amorphous metallic fiber wires with large wire diameter, a cord which is well organized and has high strength is obtained while fibers make up a low proportion per cross sectional area of the cord. Accordingly, the strength per cross sectional area of the cord is low and the flection strain to be applied to the metallic wire becomes large, thereby shortening the life against fatigue.

Besides the diameter of the amorphous metallic wire forming the cord, the diameter of the cord itself is a factor by which the cord structure is determined. The cord strength increases in proportion to the square of the cord diameter while the strain to be applied to the outermost layer of the cord at the flection deformation increases in proportion to the cord diameter. Therefore, when the cord diameter is enlarged in order to enhance the strength, the fatigue due to flection is promoted.

The inventor found that if the relation between the cord diameter and the metallic fiber wire diameter is within a specific range, the cord having high strength is obtained without lowering the flection fatigue resistance. In view of this finding, this invention has been made.

SUMMARY OF THE INVENTION

This invention premises a tension member of a belt, which is composed of a cord formed of amorphous metallic wires. The tension member comprises a cord formed in such a manner that many amorphous metallic wires are arranged in parallel and twisted, or a cord formed in such a manner that many amorphous metallic fibers are arranged in parallel, twisted primarily to be formed into a yarn and that the necessary number of yarns are twisted, wherein the cord satisfies the following formula:

$$aD^2 + b\phi^2 + cD + d\phi + eD\phi + f \geq 0.900$$

in which D is a diameter of the cord in millimeters, $\phi$ is a diameter of the amorphous metallic wire in micrometers, a is -0.680, b is -3.13 $\times$ 10$^{-5}$, c is 0.773, d is 2.78 $\times$ 10$^{-3}$, e is 2.42 $\times$ 10$^{-3}$, and f is 0.618.

Under the above construction, the belt having the tension member of this invention increases its strength without lowering its flection fatigue resistance.

For the amorphous metallic wire, the amorphous metallic wire of the iron family (Fe, Co, Ni series) may be used in the present invention. In the case of the amorphous metallic wire of the iron series, the amorphous metallic wire to be obtained preferably contains at least one of the below-mentioned metallic wire groups at the content of 0.01 to 75 atomic percents and the rest substantially formed of Fe, wherein the metallic wire groups are (a) a group containing at least one kind of metal in P, C, Si, B and Ge at the content of 0.01 to 35 atomic percents, (b) a group containing at least one kind of metal in Co and Ni at the content of 0.01 to 40 atomic percents, (c) a group containing at least one kind of metal in Cr, Nb, Ta, V, Mo, W, Ti and Zr at the content of 0.01 to 15 atomic percents, and (d) a group containing at least one kind of metal in Mn, Pd, Al, Au, Cu, Zn, Cd, Sn, Sb, Hf and Pt at the content of 0.01 to 5 atomic percents.

In the case of the amorphous metallic wire of the cobalt series, the amorphous metallic wire to be obtained preferably contains at least one of the below-mentioned metallic wire groups at the content of 0.01 to 75 atomic percents and the rest substantially formed of Co, wherein the metallic wire groups are (a) a group containing at least one kind of metal in P, C, Si, B and Ge at the content of 0.01 to 35 atomic percents, (b) a group containing at least one kind of metal in Fe and Ni at the content of 0.01 to 40 atomic percents, (c) a group containing at least one kind of metal in Cr, Nb, Ta, V, Mo, W, Ti and Zr at the content of 0.01 to 15 atomic percents, and (d) a group containing at least one kind of metal in Mn, Pd, Al, Au, Cu, Zn, Cd, Sn, Sb, Hf and Pt at the content of 0.01 to 5 atomic percents.

In the case of the amorphous metallic wire of the nickel series, the amorphous metallic wire to be obtained preferably contains at least one of the below-mentioned metallic wire groups at the content of 0.01 to 75 atomic percents and the rest substantially formed of Ni, wherein the metallic wire groups are (a) a group containing at least one kind of metal in P, C, Si, B and Ge at the content of 0.01 to 35 atomic percents, (b) a group containing at least one kind of metal in Fe and Co at the content of 0.01 to 40 atomic percents, (c) a group containing at least one kind of metal in Cr, Nb, Ta, V, Mo, W, Ti and Zr at the content of 0.01 to 15 atomic percents, and (d) a group containing at least one kind of metal in Mn, Pd, Al, Au, Cu, Zn, Cd, Sn, Sb, Hf and Pt at the content of 0.01 to 5 atomic percents.

The amorphous metallic wire is preferably obtained by a spinning process of injecting molten metal into refrigerant and the wire is preferably subjected to a drawing and extending process in which the reduction in area is 10% or more after the wire is obtained by the spinning process of injecting molten metal into refrigerant.

Further, the cord formed of the above-mentioned metallic fiber wire is subjected to adhesive treatment by means of the combination of adhesives such as epoxy resin, isocyanate compound, ethylene urea compound, resorcin formaldehyde latex (RFL), chlorinated rubber and phenol resin. For the adhesive treatment, a dipping process is preferably used in order to uniformly apply the adhesives to the cord.

Rubber material to be used for the belt is not particularly limited. For example, applied for the belt is rubber material commonly used for rubber products, i.e., natural rubber, SBR, NBR, H-NBR, CR, CSM, alkyl CSM, EPDM, EP, BR, IR and fluorine-contained rubber.

BRIEF DESCRIPTION OF THE DRAWING

The accompanying drawings show a preferred embodiment of the present invention in which: Fig. 1 is a schematic diagram showing a construction of an embodiment of a tension member of a belt; Fig. 2 is a longitudinal cross section of a synchronous belt; Fig. 3 is a schematic diagram showing a construction of a belt flection fatigue test machine; and Fig. 4 is a graph showing a relation between the maintaining ratio of belt strength, namely, the ratio of the belt strength after the flection fatigue test to the original belt strength, and the combination of the cord diameter and the wire diameter. In Fig. 4, the axis of abscissas shows the cord diameter and the axis of ordinates shows the wire diameter.

DESCRIPTION OF THE PREFERRED EMBODIMENT

Description is made below about the preferred embodiment of the present invention, with reference to the drawings.

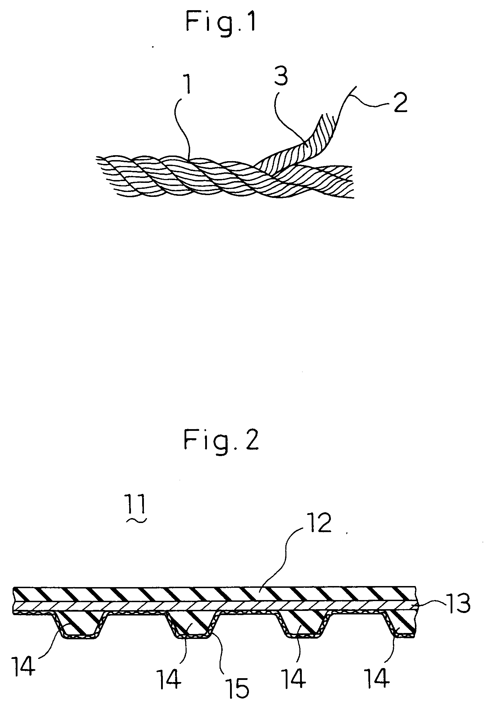

In Fig. 1 showing an embodiment of a tension member of a belt, reference numeral 1 is a tension member of a synchronous belt, 2 is a wire formed of amorphous metallic fibers, and 3 is a twisted yarn formed in such a manner that many amorphous metallic fiber wires 2 are selected suitably according to a belt to be used, arranged in parallel and twisted primarily. The tension member 1 is so composed that three primarily-twisted yarns 3 are finally twisted.

In Fig. 2 showing an example in which the above embodiment of the tension member is applied for a synchronous belt, reference numeral 11 is a synchronous belt. The synchronous belt 11 has an extending rubber layer 12, a cord 13 (tension member) embedded in a spiral in the extending rubber layer 12 and so composed that many amorphous metallic fiber wires are arranged in parallel to be formed into a twisted yarn 3 and that the necessary number of twisted yarns 3 are collected and twisted, and a plurality of teeth 14 integrally formed of rubber of the same material as the extending rubber layer 12 on one face (underside in Fig. 2) of the extending rubber layer 12. The surface of the teeth 14 is integrally covered with a reinforcing canvas 15.

Description is made next about a flection fatigue test carried out to the belt of the present invention having the above-mentioned construction.

(Belt of the present invention)

By using wires produced by Unitika Ltd. under the trade name "BORFUR DE-10" for amorphous metallic fiber wires forming a tension member, six types of belts of the present invention are produced under conditions of the cord diameters (mm) and the amorphous metallic fiber wire diameters ($\mu$m) respectively shown in Table 1.

In detail, ten groups of twisted yarns which are each formed so as to collect and twist the set number of amorphous metallic fiber wires are finally twisted in the reverse direction of the first twist to be formed into a tension member. Here, the number of wires forming the twisted yarn is suitably selected according to the cord diameter. At the time, prepared are a cord in which the first twist is a Z twist and the final twist is an S twist and a cord in which the first twist is an S twist and the final twist is a Z twist. The above tension member is dipped into adhesive of an isocyanate compound to form a sub-coat layer, dipped into adhesive of resorcin formaldehyde latex (RFL) to form a second coat layer and then subjected to heat treatment under tension. The plurality of tension members subjected to heat treatment are arranged, on teeth coated with rubber, in a spiral so that the cord with S final twist and the cord with Z final twist are alternately placed. A CR sheet is adhered to the arranged tension members, pressed and vulcanized under pressure. As a result, there are obtained six kinds of synchronous belts in each of which the plurality of tension members are embedded in the belt body.

(Belt of comparative example)

By using wires produced by Unitika Ltd. under the trade name "BORFUR DE-10" for amorphous metallic fiber wires forming a tension member, four types of belts of the comparative example are produced in the same way of the belts of the present invention, except for the conditions of the cord diameters (mm) and the amorphous metallic fiber wire diameters ($\mu$m) respectively shown in Table 1.

[Table 1]

|  |  | Cord diameter | Wire diameter |
|---|---|---|---|
| Present invention example | 1 | 0.65mm | 36 $\mu$m |
|  | 2 | 0.65mm | 50 $\mu$m |
|  | 3 | 0.89mm | 50 $\mu$m |
|  | 4 | 0.89mm | 100 $\mu$m |
|  | 5 | 0.73mm | 70 $\mu$m |
|  | 6 | 0.50mm | 100 $\mu$m |
| Comparative example | 1 | 1.20mm | 50 $\mu$m |
|  | 2 | 1.20mm | 30 $\mu$m |
|  | 3 | 0.50mm | 120 $\mu$m |
|  | 4 | 0.30mm | 100 $\mu$m |

(Test details)

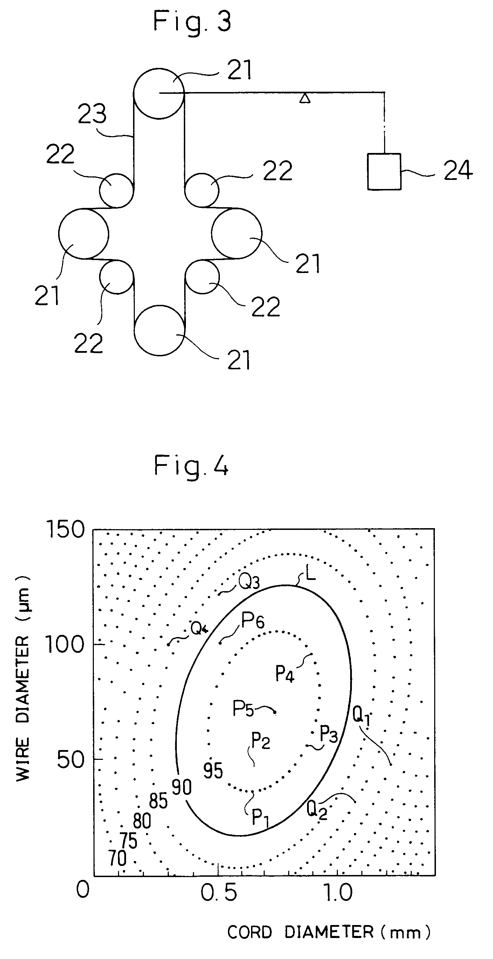

As shown in Fig. 3, there is prepared a belt flection fatigue test machine comprising four pulleys 21 with large diameter, and four pulleys 22 with small diameter which are each disposed between two pulleys 21 with large diameter. A synchronous belt 23 is wound around the pulleys 21, 22 of the belt flection fatigue test machine, and is run with a set tension applied by a weight 24. The diameter of the pulley 22 with small diameter is 30mm. When the synchronous belt 23 passes each of four pulleys 22 with small diameter one time, that is, when the respective four small diameter pulleys 22 flex the belt so that the total number of belt flection times is four, the number of belt runs is counted as four cycles.

(Test results)

Test results are shown in Fig. 2. In the present invention examples and the comparative examples of Fig. 2, the maintaining ratio of belt strength expresses as a percentage (%) the result after the belt is flexed $1 \times 10^8$ times by running, based on the strength before the belt run.

[Table 2]

|  |  | Maintaining ratio of belt strength |
|---|---|---|
| Present invention example | 1 | 94.9% |
|  | 2 | 97.2% |
|  | 3 | 93.6% |
|  | 4 | 94.7% |
|  | 5 | 98.5% |
|  | 6 | 92.0% |
| Comparative example | 1 | 77.2% |
|  | 2 | 81.1% |
|  | 3 | 86.2% |
|  | 4 | 82.6% |

The test results of Fig. 2 is shown in a graph of Fig. 4 by placing the cord diameter on the axis of abscissas and placing the wire diameter on the axis of ordinates. As is evident from Fig. 4, the maintaining ratio of belt strength is more than 90.0% in the case the relation between the cord diameter and the wire diameter is within a specific range. In Fig. 4, the examples 1 to 6 according to the present invention is indicated by P1 to P6 respectively, and the comparative examples 1 to 4 is indicated by Q1 to Q4 respectively. The values in Fig. 4 indicate only decimal places, that is, for example, the value of 90 means 0.90.

Within the closed curve line L, a sufficient maintaining ratio of belt strength is obtained. In detail, if there is employed the tension member in which the cord diameter and the wire diameter satisfying the below-mentioned formula obtained by multiple regression analysis are selected, a belt having high strength can be obtained without lowering the flection fatigue resistance.

The above formula is as follows:

$$aD^2 + b\phi^2 + cD + d\phi + eD\phi + f \geq 0.900$$

wherein D is the diameter of the cord in millimeters, $\phi$ is the diameter of the amorphous metallic wire in micrometers, a is -0.680, b is $-3.13 \times 10^{-5}$, c is 0.773, d is $2.78 \times 10^{-3}$, e is $2.42 \times 10^{-3}$, and f is 0.618.

In the above embodiment, the tension member of the present invention is applied for the synchronous belt. However, the tension member of the present invention is not limited to the above application, that is, may be applied for a transmission belt and a belt for conveyer each containing a V-belt, a flat belt and a V-ribbed belt.

**Claims**

1. A tension member of a belt which is composed of a cord formed of amorphous metallic wires, comprising

   a cord formed in such a manner that many amorphous metallic wires are arranged in parallel and twisted,

   wherein the cord satisfies the following formula:

   $$aD^2 + b\phi^2 + cD + d\phi + eD\phi + f \geq 0.900$$

   in which D is a diameter of the cord in millimeters, $\phi$ is a diameter of the amorphous metallic wire in micrometers, a is -0.680, b is $-3.13 \times 10^{-5}$, c is 0.773, d is $2.78 \times 10^{-3}$, e is $2.42 \times 10^{-3}$, and f is 0.618.

2. A tension member of a belt which is composed of a cord formed of amorphous metallic wires, comprising

   a cord formed in such a manner that many amorphous metallic fibers are arranged in parallel, twisted primarily to be formed into a yarn and that the necessary number of yarns are twisted,

   wherein the cord satisfies the following formula:

   $$aD^2 + b\phi^2 + cD + d\phi + eD\phi + f \geq 0.900$$

   in which D is a diameter of the cord in millimeters, $\phi$ is a diameter of the amorphous metallic wire in micrometers, a is -0.680, b is $-3.13 \times 10^{-5}$, c is 0.773, d is $2.78 \times 10^{-3}$, e is $2.42 \times 10^{-3}$, and f is 0.618.

Fig.1

Fig.2

# Fig. 3

# Fig. 4

CORD  DIAMETER (mm)

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A,D | PATENT ABSTRACTS OF JAPAN vol. 15, no. 60 (C-0805) 13 February 1991 & JP-A-22 089 192 (UNITIKA LTD.) 29 November 1990 * abstract * | 1,2 | F16G1/12 F16G5/10 |
| A,D | PATENT ABSTRACTS OF JAPAN vol. 12, no. 424 (M-761) 10 November 1988 & JP-A-63 158 233 (HONDA MOTOR CO. LTD.) 1 July 1988 * abstract * | 1,2 | |
| A,D | DATABASE WPI Week 8803, Derwent Publications Ltd., London, GB; AN 88-018906 & JP-A-62 282 087 (BRIDGESTONE TIRE K.K.) 7 December 1987 * abstract * | | |
| A | PATENT ABSTRACTS OF JAPAN vol. 10, no. 267 (M-516) 11 September 1986 & JP-A-61 092 837 (BRIDGESTONE CORP.) 10 May 1986 * abstract * | | TECHNICAL FIELDS SEARCHED (Int.Cl.6) F16G |

The present search report has been drawn up for all claims

| Place of search | Date of completion of the search | Examiner |
|---|---|---|
| THE HAGUE | 15 December 1994 | Baron, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)